Europäisches Patentamt

European Patent Office

Office européen des brevets

(19)

(11) **EP 1 094 984 B1**

(12) **FASCICULE DE BREVET EUROPEEN**

(45) Date de publication et mention
de la délivrance du brevet:
**19.02.2003 Bulletin 2003/08**

(21) Numéro de dépôt: **99920888.7**

(22) Date de dépôt: **19.05.1999**

(51) Int Cl.⁷: **C01B 25/10**

(86) Numéro de dépôt international:
**PCT/FR99/01189**

(87) Numéro de publication internationale:
**WO 00/001614 (13.01.2000 Gazette 2000/02)**

(54) **PROCEDE INDUSTRIEL DE FABRICATION EN CONTINU D'UN MELANGE PF 5? ET D'HCl, ET MELANGE AINSI OBTENU**

VERFAHREN ZUR KONTINUIERLICHEN HERSTELLUNG EINES GEMISCHES AUS PHOSPHOPENTAFLUORID UND CHLORWASSERSTOFF, UND ERHALTENES GEMISCH

INDUSTRIAL METHOD FOR CONTINUOUSLY MAKING A PF 5? AND HCl MIXTURE AND RESULTING MIXTURE

(84) Etats contractants désignés:
**AT BE CH DE DK ES FI FR GB GR IE IT LI LU NL PT SE**

(30) Priorité: **07.07.1998 FR 9808681**

(43) Date de publication de la demande:
**02.05.2001 Bulletin 2001/18**

(73) Titulaire: **Atofina**
**92800 Puteaux (FR)**

(72) Inventeurs:
• **JOUBERT, Philippe**
**F-69005 Lyon (FR)**
• **PERDRIEUX, Sylvain**
**F-69390 Charly (FR)**

(74) Mandataire: **Neel, Henry**
**Atofina,**
**Départment Propriété Industrielle,**
**4/8, Cours Michelet**
**92800 Puteaux (FR)**

(56) Documents cités:
**EP-A- 0 816 287          EP-A- 0 846 657**

• **PATENT ABSTRACTS OF JAPAN vol. 016, no. 479 (C-0992), 6 octobre 1992 (1992-10-06) & JP 04 175216 A (TOOKEMU PURODAKUTSU:KK), 23 juin 1992 (1992-06-23)**
• **DATABASE WPI Section Ch, Week 9742 Derwent Publications Ltd., London, GB; Class E34, AN 97-455831 XP002056735 & RU 2 075 435 C (SIBE CHEM COMBINE), 20 mars 1997 (1997-03-20)**

**Description**

La présente invention concerne un procédé de préparation industrielle de pentafluorure de phosphore ($PF_5$) mélangé à du chlorure d'hydrogène (HCl).

Les méthodes de synthèses de $PF_5$ par fluoration oxydante du trichlorure de phosphore ($PCl_3$) en présence de fluorure d'hydrogène (HF) , déjà décrites dans l'état de la technique, conduisent à du $PF_5$ contenant des quantités notables d'une part, de HF et de HCl et d'autre part de l'agent oxydant dichlore, dibrome ou diiode.

Ainsi, la demande de brevet EP 0816287 décrit la synthèse de $PF_5$ à partir de $PCl_3$ suivant la réaction :

$$PCl_3 + 5HF + Cl_2 \ (Br_2, I_2) \to PF_5 + 5HCl \ (HBr, HI)$$

Il est préconisé d'utiliser un procédé d'ajout continu de dichlore dans un seul réacteur ou autoclave contenant du trichlorure de phosphore et une quantité de fluorure d'hydrogène supérieure à la quantité stoechiométrique.

L'excès de HF sert alors de solvant du milieu réactionnel.

L'agent oxydant peut être en défaut ou en excès ou en quantité stoechiométrique par rapport au $PCl_3$. Les exemples de synthèse de $PF_5$ en continu indiquent cependant un excès molaire de dichlore ou une quantité stoechiométrique. Dans ces conditions il est seulement rapporté que dans le mélange gazeux obtenu, $PF_3$ n'a pas été détecté. Il n'est pas fait mention de la teneur en HF et en dichlore du mélange gazeux obtenu.

La demande de brevet EP 0846657 décrit un procédé de fluoration du trichlorure de phosphore avec le fluorure d'hydrogène anhydre en phase liquide en présence de dichlore.

Le procédé est avantageusement effectué de manière continue.

Le rapport molaire HF/ $PCl_3$ est au moins égal à 5 et de préférence compris entre 6 et 30.

Le rapport molaire $Cl_2$/ $PCl_3$ est au moins égal à 1, de préférence compris entre 1 et, 1,4, et avantageusement compris entre 1 et 1,2.

Il est décrit que selon un mode de fonctionnement continu, la réaction est effectuée dans un appareillage classique, bien connu de l'homme de l 'art. il peut s'agir d'un réacteur alimenté sous forme gazeuse et/ou liquide, par des matières premières et des recyclages et chauffé ou refroidi de manière adéquate.

Les exemples de fonctionnement en continu font état d'un seul réacteur alimenté conjointement par du $PCl_3$, de l'HF et du $Cl_2$. Dans un bilan réactionnel, les gaz issus de la réaction ont été recueillis et analysés. Les analyses chimiques ont montré les débits horaires en moles suivants :

$PF_5$ : 4 Mol. / h
HF : 0,8 Mol. / h
HCl : 20 Mol. / h
$Cl_2$ : 0,8 Mol. / h.

Le mélange gazeux $PF_5$ + 5HCl obtenu contient donc environ 3,1% molaire de dichlore résiduel et environ 3,1% molaire de HF. Cette qualité est insuffisante pour certaines applications, notamment celle de la fabrication de $Li^+PF_6^-$ comme électrolyte dans les batteries.

L'objet de la présente invention est de fournir un procédé industriel de fabrication en continu d'un gaz constitué d'un mélange de $PF_5$ et de HCl à très faibles teneurs en $Cl_2$ et HF, ce gaz étant directement utilisable pour la fabrication de $Li^+PF_6^-$. Par très faibles teneurs on entend une teneur inférieure à 10 p.p.m. volumique en $Cl_2$ et inférieure à 50 p. p.m. volumique en HF, rapportés au mélange gazeux.

Ce but est atteint par un procédé industriel de fabrication en continu d'un mélange $PF_5$ + 5HCl dans une installation, caractérisé en ce que:

a) on produit en continu dans une première zone réactionnelle (Z1, Z21, Z31) de l'installation, par addition de $Cl_2$ à du $PCl_3$ liquide et/ou à un mélange liquide de $PCl_3$ et de $PCl_5$, le $Cl_2$ étant en sous-stoechiométrie par rapport au $PCl_3$ selon la réaction :
$PCl_3 + Cl_2 \to PCl_5$, une phase constituée de $PCl_3$ et de $PCl_5$ dans un pourcentage molaire $PCl_3$/$PCl_5$ tel que cette phase soit pompable à la température de mise en oeuvre du procédé,
b) on met cette phase en contact dans une deuxième zone réactionnelle (Z2, Z22, Z32) de l'installation avec du HF en sous stoechiométrie par rapport au $PCl_5$ selon la réaction :

$$PCl_5 + 5HF \to PF_5 \ gazeux + 5HCl \ gazeux,$$

pour obtenir un gaz à très faibles teneurs en HF et Cl$_2$.

Les pourcentages molaires de PCl$_3$ et de PCl$_5$ dans un mélange conduisant à une phase liquide à une température déterminée, sont publiées dans M.K.Chikanova, D.M. Laptev and E.S. Vorontsov, Russian Journal of Inorganic Chemistry, 16 (3), pp 453-454, 1971.

A partir du diagramme de fusion du binaire PCl$_3$/PCl$_5$ ainsi connu, l'homme du métier peut déterminer les proportions relatives de PCl$_3$ et de PCl$_5$ pour obtenir une phase liquide à une température déterminée. Cette température est toujours supérieure à la température de fusion du PCl$_3$ pur ou du PCl$_3$ utilisé ( -94°C dans cette publication) . Pour obtenir un liquide pompable, on peut utiliser aussi un liquide peu chargé en solide. De manière générale, cette phase liquide pompable peut comporter 3 à 5% en poids de PCl$_5$ supplémentaire par rapport à la quantité relative de PCl$_5$ conduisant à une phase liquide sans solide (limite de solubilité de PCl$_5$ dans le PCl$_3$.

Les conditions réactionnelles telles que l'agitation du milieu réactionnel, le temps de séjour, la température et éventuellement la pression dans la première zone de l'installation, sont choisies de telle sorte que la phase liquide obtenue sortant de la première zone ne contient pratiquement pas de Cl$_2$ (teneur inférieure à 10 p.p.m. volumique).

Au lieu d'oxyder partiellement PCl$_3$ par le dichlore pour obtenir in situ du PCl$_5$, on ne sortirait pas du cadre de la présente invention si on ajoutait en continu et/ou en semi-continu du PCl$_5$ solide à du PCl$_3$ liquide et/ou à un mélange liquide de PCl$_3$ et de PCl$_5$ au lieu d'oxyder le PCl$_3$ par le Cl$_2$.

Avantageusement, dans la synthèse mettant en oeuvre le dichlore, le rapport molaire PCl$_3$/Cl$_2$ est compris entre 1 et 60. De préférence, le rapport molaire PCl$_3$/Cl$_2$ est compris entre 10 et 30. Avec le dichlore en sous-stoechiométrie et en particulier pour les rapports entre 10 et 30, la teneur en dichlore résiduel dans le mélange PCl$_3$/PCl$_5$ devient extrêmement faible, voire non détectable à la sortie de la première zone.

Avantageusement, la température dans la première zone est comprise entre -40°C et +100°C et de préférence de -10°C à +50°C. Cette deuxième gamme de températures procure une cinétique réactionnelle rapide mais pas de réaction violente au voisinage du point d'introduction du dichlore.

Avantageusement, dans la deuxième zone de l'installation le rapport molaire HF/PCl$_5$ (dans un excès de PCl$_3$) est inférieur à 5. Cela à pour effet, suivant les mêmes considérations que ci-dessus, que la teneur en HF résiduel devient extrêmement faible, voire non détectable.

De préférence, dans la deuxième zone de l'installation le rapport molaire HF/PCl$_5$ est compris entre 2 et 4,5. Ce rapport permet un rendement horaire satisfaisant tout en assurant une teneur en HF inférieure a la limite de détection (25 p.p.m. volumique).

Avantageusement, dans la deuxième zone réactionnelle la pression est supérieure à 0,1 MPa. En effet, un fonctionnement sous pression minimise les entraînements de PCl$_3$ et de PCl$_5$.

De préférence, ladite pression dans la deuxième zone réactionnelle est comprise entre 0,5 MPa et 6 MPa.

Avantageusement, la température dans la deuxième zone est comprise entre -40°C et +60°C et de préférence la température est comprise entre -20°C et +20°C et la pression est comprise entre 1,5 et 5 MPa. En effet, cela permet d'avoir une cinétique relativement rapide tout en obtenant une faible pression partielle de HF dans la deuxième zone. Cela concourt à une plus grande pureté du mélange gazeux PF$_5$ + 5HCl.

Dans une forme de réalisation préférée du procédé selon l'invention, le gaz à très faibles teneurs en Cl$_2$ et HF est mis en contact dans une troisième zone de l'installation avec la phase liquide de PCl$_3$ et PCl$_5$ produite dans la première zone, avant de quitter l'installation. Cette mesure a l'avantage de produire un nouvel effet de réduction des traces de HF et de Cl$_2$. En effet, les traces de HF réagissent avec PCl$_5$ et les traces de Cl$_2$ réagissent avec PCl$_3$. Si de plus, La pression dans cette troisième zone est, par exemple comprise entre 0,5 MPa et 6 MPa et/ou si la température dans cette troisième zone est basse par exemple comprise entre -30°C et +20°C, l'évaporation de PCl$_3$ et de PCl$_5$ est minimisée.

Dans une autre forme de réalisation préférée du procédé selon l'invention, le gaz à très faibles teneurs en Cl$_2$ et HF est mis en contact dans la première zone de l'installation avec la phase liquide de PCl$_3$ et PCl$_5$ puis est mis en contact dans une troisième zone de l'installation avec du PCl$_3$ liquide pur, avant de quitter l'installation. Cette troisième zone de contact entre le gaz à très faibles teneurs en Cl$_2$ et HF et du PCl$_3$ sans quantité notable de PCl$_5$ a pour effet de diminuer encore la teneur en Cl$_2$, ce dernier oxydant le PCl$_3$ pour donner du PCl$_5$ qui lui même peut réagir avec les traces éventuelles de HF.

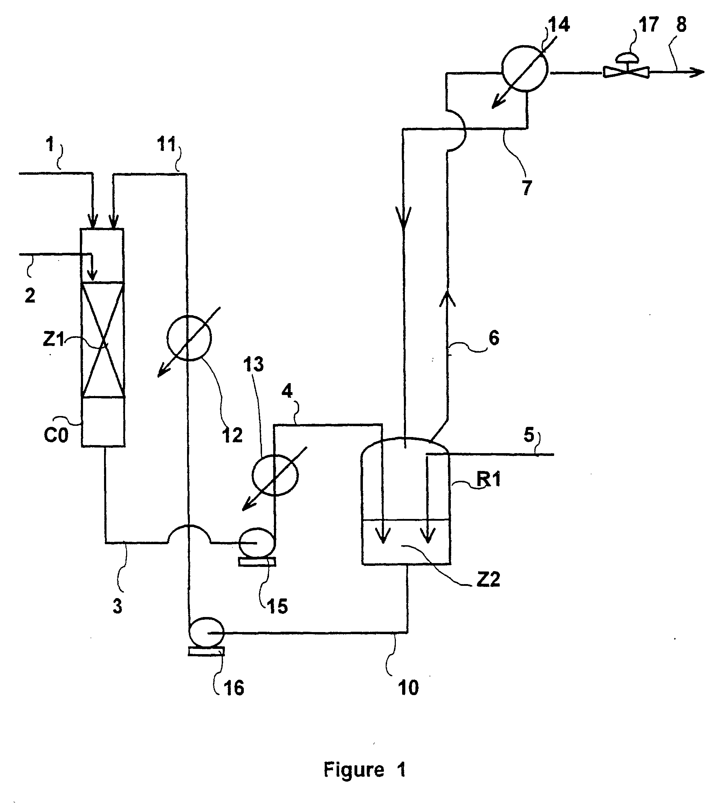

La présente invention sera mieux comprise à l'aide de la description de trois modes de réalisation du procédé selon l'invention, dans trois installations différentes représentées schématiquement aux figures 1, 2 et 3.

La description de ces modes de réalisation et de ces installations est donnée à titre purement illustratif et n'a pas pour but de limiter la présente invention.

Les installations des figures 1, 2 et 3 sont réalisées dans des matériaux capables de résister à la pression, aux basses températures et à la corrosion des produits chimiques mis en oeuvre ou obtenus. Ces matériaux peuvent être par exemple choisis parmi les aciers ordinaires ou inoxydables, les alliages et notamment ceux à base de chrome/ nickel/fer/cuivre ou bien encore les matières plastiques massives ou en revêtement.

La figure 1 montre une première forme de réalisation de l'installation qui comporte essentiellement une colonne C0 définissant la première zone Z1 où est produit la phase liquide $PCl_3$ + $PCl_5$. Cette colonne C0 pourrait être remplacée par un mélangeur statique ou un réacteur agité. Un réacteur R1 éventuellement agité définit la deuxième zone Z2 où une phase liquide $PCl_3$ + $PCl_5$ est mise en contact avec du HF pour produire le mélange gazeux $PF_5$ + 5HCl.

Plus précisément, le $PCl_3$ liquide arrive dans le haut de la colonne C0 (zone Z1) par le conduit 1 et le dichlore arrive par le conduit 2 dans la partie supérieure de cette même colonne au dessus du garnissage. La température de la zone Z1 peut varier de -10°C à +50°C. Le $Cl_2$ réagit quantitativement avec le $PCl_3$ en excès pour donner du $PCl_5$ en solution dans un excès molaire de $PCl_3$. La phase liquide ainsi obtenue est aspirée par la pompe 15 au travers du conduit 3 puis renvoyée au travers de l'échangeur thermique 13 puis du conduit 4 dans la zone Z2 du réacteur R1. Le haut du réacteur R1 est équipée d'un conduit de sortie 6 conduisant à un condenseur 14 à reflux. Le reflux liquide constitué essentiellement de $PF_5$ et de HCl, retourne par le conduit 7 dans la partie supérieure du réacteur R1.

Dans le réacteur R1 arrive le conduit 5 d'alimentation en HF. Ce dernier réagit sur la phase liquide de $PCl_3$ et $PCl_5$ pour donner le mélange gazeux $PF_5$ + 5HCl qui rejoint le condenseur 14 par le conduit 6. L'excès de la phase liquide arrivant au bas du réacteur R1 est repris par le conduit 10 et refoulé par la pompe 16 au travers de l'échangeur thermique 12 par le conduit 11 dans la partie supérieure de la colonne C0.

Le mélange gazeux $PF_5$ + 5HCl passe le condenseur à reflux 14 puis par un organe de régulation de pression 17 et enfin par la voie de sortie 8 pour quitter l'installation.

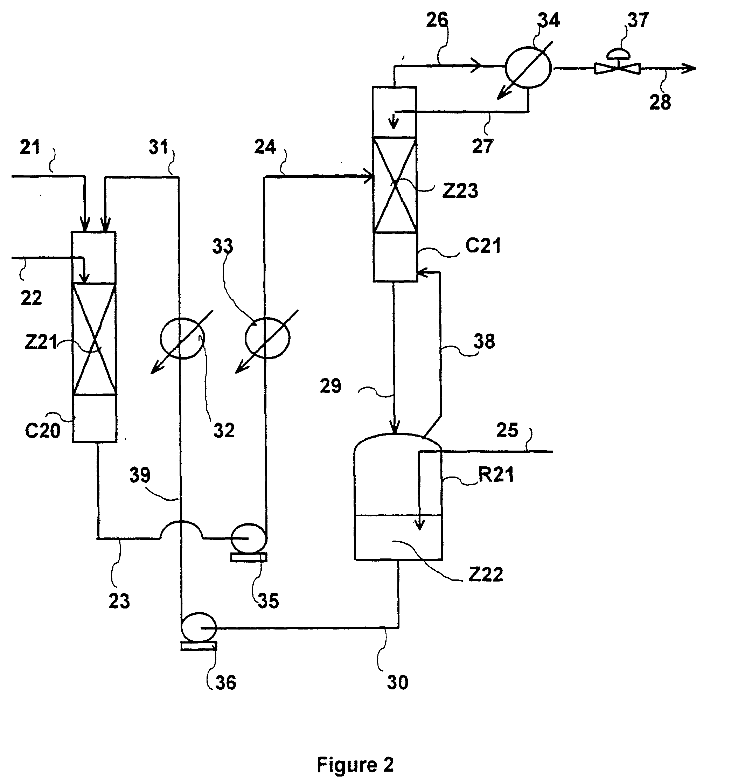

La figure 2 montre une deuxième forme de réalisation de l'installation qui comporte essentiellement une colonne C20 définissant la première zone Z21 où le dichlore réagit avec $PCl_3$, un réacteur R21 définissant la zone Z22 où HF réagit avec le mélange liquide $PCl_3$ + $PCl_5$, et une colonne C21 définissant la troisième zone Z23 où le gaz $PF_5$ + 5HCl est lavé par le mélange de $PCl_3$ + $PCl_5$ provenant de la colonne C20.

Plus précisément, le $PCl_3$ arrive en haut de la colonne par le conduit 21 alors que le dichlore arrive par le conduit 22 en haut du garnissage de ladite colonne. Le dichlore oxyde une partie du $PCl_3$ pour donner un liquide pompable en bas de colonne au travers du conduit 23.

Ce conduit 23 arrive à la pompe 35 et le liquide $PCl_3$ + $PCl_5$ est refoulé au travers de l'échangeur thermique 33 puis renvoyé par le conduit 24 au milieu de la colonne C21 de lavage du gaz $PF_5$ + 5HCl.

Le liquide $PCl_3$ + $PCl_5$ sort par gravité de la colonne C21 et rejoint par le conduit 29 le haut du réacteur R21 qui est ainsi alimenté par le mélange $PCl_3$ + $PCl_5$.

Dans ce réacteur, l'HF arrive par le conduit 25 et réagit exclusivement avec $PCl_5$ en excès stoechiométrique pour donner du gaz $PF_5$ + 5HCl. Ce gaz remonte par le conduit 38 pour atteindre le pied de la colonne C21, traverse cette colonne et est repris en tête de colonne par le conduit 26 menant à un condenseur à reflux 34 qui lorsque la pression est suffisante reflue une partie d'un mélange liquide de $PF_5$ et d'HCl par le conduit 27 dans la tête de colonne C21. Le mélange $PF_5$ + 5HCl non reflué passe par un organe de régulation de pression 27 puis par le conduit de sortie 28 pour quitter l'installation.

Le mélange réactionnel liquide de la deuxième zone Z22 est soutiré au bas du réacteur R21 par le conduit 30 puis est refoulé par la pompe 36 dans le conduit 39 menant à l'échangeur thermique 32. De cet échangeur il emprunte le conduit 31 avant d'être introduit en tête de colonne C20.

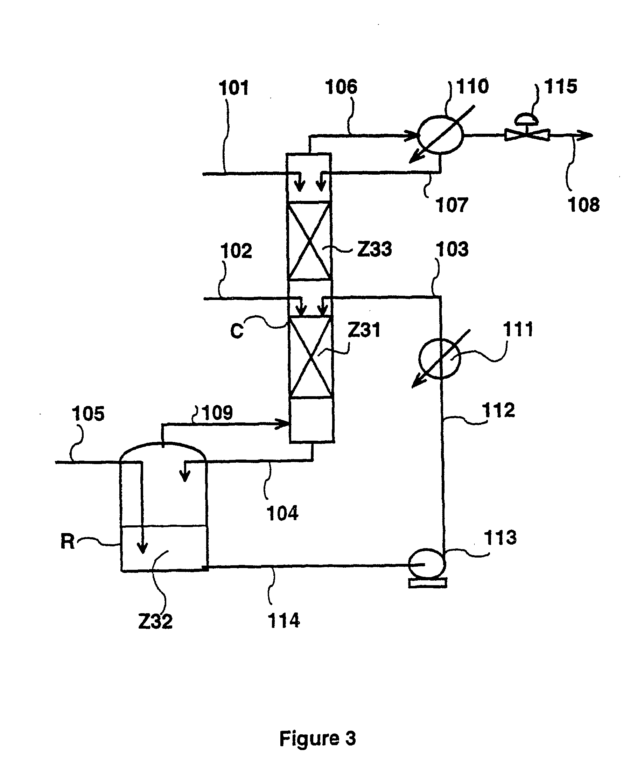

La figure 3 montre une troisième forme de réalisation de l'installation qui comporte essentiellement un réacteur R définissant la deuxième zone Z32 de l'installation où HF réagit avec le mélange liquide $PCl_3$ + $PCl_5$, une colonne C divisée à l'intérieur en deux parties distinctes, la partie inférieure définissant la première zone Z31 et la partie supérieure définissant la troisième zone Z33.

Dans la première zone Z31, on introduit du $Cl_2$ par le conduit 102 et le mélange $PCl_3$ + $PCl_5$ par le conduit 103. L'addition de $PCl_3$ pur s'effectue par le conduit 101 dans la troisième zone Z33. Ce $PCl_3$ va rejoindre par gravité la première zone Z31 et réagir également avec les traces de $Cl_2$, puis se joindre au mélange liquide $PCl_3$ + $PCl_5$ en pied de colonne C. Ce mélange est pris par le conduit 104 qui l'introduit dans le réacteur R. Dans ce réacteur l'HF arrive par le conduit 105. Le mélange gazeux $PF_5$ + 5HCl sort du haut du réacteur R par le conduit 109, rejoint le pied de la colonne C puis traverse successivement la première zone Z31 puis la troisième zone Z33 avant de rejoindre la tête de colonne C équipée d'un condenseur à reflux 110. Dans la première zone Z31 le mélange gazeux est épuré de ses traces de HF et dans la troisième zone Z33 de ses traces de $Cl_2$ et des dernières traces de HF. Le mélange gazeux $PF_5$ + 5HCl quitte la tête de la colonne C par le conduit 106 en passant successivement au travers du condenseur à reflux 110 puis d'un organe de régulation de pression 115 et enfin par la voie de sortie 108 pour quitter l'installation. Le conduit 107 part du condenseur 110 pour rejoindre la tête de colonne C, permettant ainsi un reflux liquide constitué de $PF_5$ et d'HCl.

Le contenu liquide du réacteur R est soutiré par le bas par le conduit 114 équipée d'une pompe 113 qui le refoule par le conduit 112 au travers d'un échangeur thermique 111 puis par le conduit 103 vers le haut de la première zone Z31 de la colonne C. Le mélange liquide $PCl_3$ + $PCl_5$ tourne donc en boucle et en régime stationnaire la consommation en $PCl_5$ par réaction avec HF est compensée par l'addition de $PCl_3$ par le conduit 101 et de $Cl_2$ par le conduit 102.

1/ Dosage du Cl$_2$ dans le mélange gazeux PF$_5$ + 5HCl en sortie d'installation.

Une partie du flux gazeux sortant de l'installation est prélevé en continu pendant un laps de temps déterminé au moyen d'une dérivation (non représentée sur les figures). Ce prélèvement passe à travers deux absorbeurs en série contenant de l'eau additionnée d'une quantité déterminée d'o-tolidine (réactif spécifique du dichlore élémentaire). Une fois le prélèvement effectué, on mélange les deux solutions aqueuses puis on les analyse selon la méthode analytique décrite dans l'ouvrage de G. CHARLOT " Chimie analytique quantitative" tome 2 Masson et Cie Editeur, 1974, page 381.

La limite de détection est de 0,07 p.p.m. de Cl$_2$.

2/ Dosage de l'HF dans le mélange gazeux PF$_5$ + 5HCl en sortie d'installation.

Ce dosage est effectué par RMN $^{19}$F.

Pour la détermination du fluorure d'hydrogène HF dans le gaz procédé constitué essentiellement de PF$_5$ + 5HCl on opère de la manière suivante. Une partie du flux gazeux est prélevé en continu durant un laps de temps connu par l'intermédiaire d'une dérivation (non représentée sur les figures), puis le gaz percole à travers un lit de LiF en poudre, ce dernier étant contenu dans une enceinte tubulaire métallique munie à chacune de ses deux extrémités d'une vanne d'isolement. PF$_5$ et HF sont retenus quantitativement et sélectivement par rapport à HCl (formation de LiPF$_6$ majoritairement et LiHF$_2$). On veille a ce que la variation de masse observée soit comprise entre 300 et 400% (cela correspond à un taux de transformation de LiF compris entre 40 et 60%). En boîte à gants sèche (H$_2$O < 10 p. p.m.), on récupère la totalité du solide puis celui-ci est broyé et homogénéisé dans un mortier.

On prélève une quantité connue de poudre à laquelle est ajouté de l'acétonitrile deutérié (0.5 ml) préalablement séché sur tamis moléculaire. La partie soluble est introduite dans un tube à vis pour la RMN (seul LiF est insoluble dans le CD$_3$CN). On procède alors à l'enregistrement du spectre $^{19}$F. Le doublet centré sur 6 p.p.m. correspond à l'espèce PF6$^-$ avec une constante de couplage $^1$JP-F de 707 Hz. Le doublet centré sur -104 p.p.m. correspond à l'espèce HF avec une constante de couplage $^1$JH-F de 480 Hz. Deux autres signaux très faibles sont détectés et correspondent aux 2 produits d'hydrolyse de LiPF$_6$, à savoir O=PF$_2$-OH et O=PF$_3$ dont les doublets sont centrés respectivement sur 6,4 p.p.m. ($^1$JP-F de 932 Hz) et sur 10,6 p.p.m. ($^1$JP-F de 1064 Hz) .

La teneur relative en HF par rapport à PF6$^-$ et aux 2 produits d'hydrolyse se ramène à la mesure des surfaces des raies corrélables respectivement à HF, PF$_6$$^-$, O=PF$_2$-OH et O=PF$_3$ :

Le calcul est le suivant :

$$\% \text{ molaire relatif en HF}$$

$$= \frac{(\text{S signal à - 104 ppm})}{\left[(\text{S signal à 6,0 ppm})/6 + (\text{S signal à - 104 ppm}) + (\text{S signal à 6,4 ppm})/2 + (\text{S signal à 10,6 ppm})/3\right]}$$

(S : désignant la surface)

Dans nos conditions d'analyse, la limite de détection en HF est de 150 p.p.m. molaire par rapport à la somme totale des espèces fluorés présentes dans la solution de CD$_3$CN. Cette valeur ramenée au mélange gazeux PF$_5$ + 5HCl, est de 25 p.p.m. volumique.

Conditions d'analyse RMN $^{19}$F:

- Spectromètre DRX400 AVANCE BRUKER
- Sonde1H/13C/19F 3 canaux.
- Fréquence d'observation 376,45 MHz
- Largeur spectrale examinée 80 000 Hz
- Angle d'impulsion 90°
- Temps d'acquisition 3,3 s
- Référence pour les déplacements chimiques (δ = 0): acide trifluoroacétique (CF$_3$COOH) en référence externe. Convention de signe - à droite et + à gauche.

Les conditions de quantitativité ont été obtenues par des mesures de temps de relaxation longitudinale T1 de l'espèce PF6$^-$ et HF (méthode d'inversion - récupération). Les conditions expérimentales ont été adaptées pour tenir compte d'un temps de relaxation supérieur à 5 fois T1.

Exemple

Dans l'installation de la figure 2, en régime stable, on introduit en continu par le conduit 21 un débit de 1375 g/h de $PCl_3$ ( 10 moles / h) tandis que par le conduit 22 on introduit 710 g de $Cl_2$ (10 moles / h) dans un flux de recyclage de $PCl_3$ + $pCl_5$ introduit par le conduit 31 de 30478 g / h comprenant 29958 g de $PCl_3$ et 520 g de $PCl_5$ en provenance du réacteur R21.

Le liquide en pied de la colonne C20 est aspiré par la pompe 35 à raison de 32563 g /h ($PCl_3$ = 29958 g et $PCl_5$ = 2605 g) puis injecté par le conduit 24 dans la colonne C21. L'HF est introduit par le conduit 25 à raison de 200 g/h (10 moles/h) qui réagit avec le $PCl_5$ dans le $PCl_3$ en provenance de la colonne C21.

Le gaz effluent sortant par le conduit 28 est analysé selon les méthodes décrites précédemment ( dichore et fluorure d'hydrogène). La teneur en dichlore est de 5 p.p.m. volumique et l'HF n'est pas mesurable par la méthode analytique ci-dessus (sa teneur est inférieure à 25 p.p.m. volumique).

## Revendications

1. Procédé industriel de fabrication en continu d'un mélange $PF_5$ + 5HCl dans une installation, **caractérisé en ce que**:

   a) on produit en continu dans une première zone réactionnelle (Z1, Z21, Z31) de l'installation, par addition de $Cl_2$ à du $PCl_3$ liquide et/ou à un mélange liquide de $PCl_3$ et de $PCl_5$, le $Cl_2$ étant en sous-stoechiométrie par rapport au $PCl_3$ selon la réaction :
   $PCl_3$ + $Cl_2$ → $PCl_5$, une phase constituée de $PCl_3$ et de $PCl_5$ dans un pourcentage molaire $PCl_3$/$PCl_5$ tel que cette phase soit pompable à la température de mise en oeuvre du procédé,
   b) on met cette phase en contact dans une deuxième zone réactionnelle (Z2, Z22, Z32) de l'installation avec du HF en sous stoechiométrie par rapport au $PCl_5$ selon la réaction :

$$PCl_5 + 5HF \rightarrow PF_5 \text{ gazeux} + 5HCl \text{ gazeux},$$

   pour obtenir un gaz à très faibles teneurs en HF et $Cl_2$.

2. Procédé suivant la revendication 1, **caractérisé en ce que** le rapport molaire $PCl_3$/$Cl_2$ est compris entre 1 et 60.

3. Procédé suivant la revendication 2, **caractérisé en ce que** le rapport molaire $PCl_3$/$Cl_2$ est compris entre 10 et 30.

4. Procédé suivant l'une des revendications 1 à 3, **caractérisé en ce que** la température dans la première zone (Z1, Z21, Z31) est comprise entre -40°C et +100°C.

5. Procédé suivant la revendication 4, **caractérisé en ce que** la température dans la première zone (Z1, Z21, Z31) est comprise entre -10°C et +50°C.

6. Procédé suivant l'une des revendications 1 à 5, **caractérisé en ce que** dans la deuxième zone (Z2, Z22, Z32) de l'installation le rapport molaire HF/$PCl_5$ (dans un excès de $PCl_3$) est inférieur à 5.

7. Procédé suivant la revendications 6, **caractérisé en ce que** le rapport molaire HF/$PCl_5$ est compris entre 2 et 4,5.

8. Procédé suivant l'une des revendications 1 à 7, **caractérisé en ce que** dans la deuxième zone réactionnelle (Z2, Z22, Z32) la pression est supérieure à 0,1 MPa.

9. Procédé suivant la revendication 8, **caractérisé en ce que** ladite pression dans la deuxième zone réactionnelle (Z2, Z22, Z32) est comprise entre 0,5 MPa et 6 MPa.

10. Procédé suivant l'une des revendication 1 à 9, **caractérisé en ce que** la température dans la deuxième zone réactionnelle (Z2, Z22, Z32) est comprise entre -40°C et +60°C.

11. Procédé suivant la revendication 10, **caractérisé en ce que** la température dans la deuxième zone (Z2, Z22, Z32) est comprise entre -20°C et +20°C et la pression est comprise entre 1,5 et 5 MPa.

**12.** Procédé suivant l'une des revendications 1 à 11, **caractérisé en ce que** le gaz à très faibles teneurs en $Cl_2$ et HF est mis en contact dans une troisième zone (Z23, Z33) de l'installation avec la phase liquide de $PCl_3$ et $PCl_5$ produite dans la première zone (Z1, Z21, Z31), avant de quitter l'installation.

**13.** Procédé suivant l'une des revendications 1 à 12, **caractérisé en ce que** le gaz à très faibles teneurs en $Cl_2$ et HF est mis en contact dans la première zone (Z1, Z21, Z31) de l'installation avec la phase liquide de PCl3 et PCl5 puis est mis en contact dans une troisième zone (Z23, Z33) de l'installation avec du $PCl_3$ liquide pur, avant de quitter l'installation.

**Claims**

**1.** Industrial process for the continuous manufacture of a $PF_5$ + 5HCl mixture in a plant, **characterized in that**:

a) continuous production is carried out in a first reaction zone (Z1, Z21, Z31) of the plant, by addition of $Cl_2$ to liquid $PCl_3$ and/or to a liquid mixture of $PCl_3$ and $PCl_5$, the $Cl_2$ being in sub-stoichiometry relative to the $PCl_3$, according to the reaction:
$PCl_3 + Cl_2 \rightarrow PCl_5$, a phase consisting of $PCl_3$ and $PCl_5$ in a $PCl_3/PCl_5$ molar percentage such that this phase is pumpable at the operating temperature of the process,
b) this phase is placed in contact, in a second reaction zone (Z2, Z22, Z32) of the plant, with HF in sub-stoichiometry relative to the $PCl_5$, according to the reaction:

$$PCl_5 + 5HF \rightarrow \text{gaseous } PF_5 + \text{gaseous } 5HCl,$$

in order to obtain a gas which has very low contents of HF and $Cl_2$.

**2.** Process according to Claim 1, **characterized in that** the $PCl_3/Cl_2$ molar ratio is between 1 and 60.

**3.** Process according to Claim 2, **characterized in that** the $PCl_3/Cl_2$ molar ratio is between 10 and 30.

**4.** Process according to one of Claims 1 to 3, **characterized in that** the temperature in the first zone (Z1, Z21, Z31) is between -40°C and +100°C.

**5.** Process according to Claim 4, **characterized in that** the temperature in the first zone (Z1, Z21, Z31) is between -10°C and +50°C.

**6.** Process according to one of Claims 1 to 5, **characterized in that** the $HF/PCl_5$ molar ratio (in an excess of $PCl_3$) is less than 5 in the second zone (Z2, Z22, Z32) of the plant.

**7.** Process according to Claim 6, **characterized in that** the $HF/PCl_5$ molar ratio is between 2 and 4.5.

**8.** Process according to one of Claims 1 to 7, **characterized in that** the pressure in the second reaction zone (Z2, Z22, Z32) is greater than 0.1 MPa.

**9.** Process according to Claim 8, **characterized in that** the said pressure in the second reaction zone (Z2, Z22, Z32) is between 0.5 MPa and 6 MPa.

**10.** Process according to one of Claims 1 to 9, **characterized in that** the temperature in the second reaction zone (Z2, Z22, Z32) is between -40°C and +60°C.

**11.** Process according to Claim 10, **characterized in that** the temperature in the second zone (Z2, Z22, Z32) is between -20°C and +20°C, and the pressure is between 1.5 and 5 MPa.

**12.** Process according to one of Claims 1 to 11, **characterized in that** the gas with very low contents of $Cl_2$ and HF is placed in contact, in a third zone (Z23, Z33) of the plant, with the liquid phase of $PCl_3$ and $PCl_5$ produced in the first zone (Z1, Z21, Z31), before leaving the plant.

EP 1 094 984 B1

13. Process according to one of Claims 1 to 12, **characterized in that** the gas with very low contents of $Cl_2$ and HF is placed in contact, in the first zone (Z1, Z21, Z31) of the plant, with the liquid phase of $PCl_3$ and $PCl_5$ and is then placed in contact, in a third zone (Z23, Z33) of the plant, with pure liquid $PCl_3$, before leaving the plant.

**Patentansprüche**

1. Industrielles Verfahren zur kontinuierlichen Herstellung eines Gemischs $PF_5$ + 5 HCl in einer Anlage, **dadurch gekennzeichnet, daß**

   a) in einer ersten Reaktionszone (Z1, Z21, Z31) der Anlage durch Zugabe von $Cl_2$ zu flüssigem $PCl_3$ und/oder zu einem flüssigen Gemisch aus $PCl_3$ und $PCl_5$, wobei das $Cl_2$, bezogen auf das $PCl_3$ in der Reaktionsgleichung: $PCl_3 + Cl_2 \rightarrow PCl_5$, in einer substöchiometrischen Menge enthalten ist, kontinuierlich eine Phase erzeugt wird, die aus $PCl_3$ und $PCl_5$ in solchen Stoffmengenanteilen an $PCl_3$ und $PCl_5$ besteht, daß diese Phase bei der Temperatur, bei der das Verfahren durchgeführt wird, pumpfähig ist,
   b) diese Phase in einer zweiten Reaktionszone (Z2, Z22, Z32) der Anlage mit HF in substöchiometrischer Menge, bezogen auf das $PCl_5$ in der Reaktionsgleichung

   $$PCl_5 + 5\,HF \rightarrow PF_5 \text{ (gasförmig)} + 5\,HCl \text{ (gasförmig)},$$

   in Kontakt gebracht wird, um ein Gas mit einem sehr niedrigen Gehalt an HF und an $Cl_2$ zu erhalten.

2. Verfahren nach Anspruch 1, **dadurch gekennzeichnet, daß** das Molverhältnis $PCl_3/Cl_2$ im Bereich von 1 bis 60 liegt.

3. Verfahren nach Anspruch 2, **dadurch gekennzeichnet, daß** das Molverhältnis $PCl_3/Cl_2$ im Bereich von 10 bis 30 liegt.

4. Verfahren nach einem der Ansprüche 1 bis 3, **dadurch gekennzeichnet, daß** die Temperatur in der ersten Zone (Z1, Z21, Z31) im Bereich von -40 bis +100 °C liegt.

5. Verfahren nach Anspruch 4, **dadurch gekennzeichnet, daß** die Temperatur in der ersten Zone (Z1, Z21, Z31) im Bereich von -10 bis +50 °C liegt.

6. Verfahren nach einem der Ansprüche 1 bis 5, **dadurch gekennzeichnet, daß** in der zweiten Zone (Z2, Z22, Z32) der Anlage das Molverhältnis $HF/PCl_5$ (in einem Überschuß an $PCl_3$) kleiner als 5 ist.

7. Verfahren nach Anspruch 6, **dadurch gekennzeichnet, daß** das Molverhältnis $HF/PCl_5$ im Bereich von 2 bis 4,5 liegt.

8. Verfahren nach einem der Ansprüche 1 bis 7, **dadurch gekennzeichnet, daß** der Druck in der zweiten Reaktionszone (Z2, Z22, Z32) größer als 0,1 MPa ist.

9. Verfahren nach Anspruch 8, **dadurch gekennzeichnet, daß** der Druck in der zweiten Reaktionszone (Z2, Z22, Z32) im Bereich von 0,5 bis 6 MPa liegt.

10. Verfahren nach einem der Ansprüche 1 bis 9, **dadurch gekennzeichnet, daß** die Temperatur in der zweiten Reaktionszone (Z2, Z22, Z32) im Bereich von -40 bis +60 °C liegt.

11. Verfahren nach Anspruch 10, **dadurch gekennzeichnet, daß** die Temperatur in der zweiten Zone (Z2, Z22, Z32) im Bereich von -20 bis +20 °C liegt und der Druck im Bereich von 1,5 bis 5 MPa liegt.

12. Verfahren nach einem der Ansprüche 1 bis 11, **dadurch gekennzeichnet, daß** das Gas mit dem sehr niedrigen Gehalt an $Cl_2$ und an HF in einer dritten Zone (Z23, Z33) der Anlage mit der flüssigen Phase aus $PCl_3$ und $PCl_5$, die in der ersten Zone (Z1, Z21, Z31) gebildet wird, in Kontakt gebracht wird, bevor es die Anlage verläßt.

13. Verfahren nach einem der Ansprüche 1 bis 12, **dadurch gekennzeichnet, daß** das Gas mit dem sehr niedrigen

Gehalt an $Cl_2$ und an HF in der ersten Zone (Z1, Z21, Z31) der Anlage mit der flüssigen Phase aus $PCl_3$ und $PCl_5$ in Kontakt gebracht wird und dann in einer dritten Zone (Z23, Z33) der Anlage mit reinem flüssigem $PCl_3$ in Kontakt gebracht wird, bevor es die Anlage verläßt.

Figure 1

Figure 2

Figure 3